# EUROPÄISCHE PATENTSCHRIFT

(11) **EP 1 556 270 B1**
(45) Veröffentlichungstag und Bekanntmachung des Hinweises auf die Patenterteilung: **20.06.2007**
(21) Anmeldenummer: 03757912.5
(22) Anmeldetag: 04.10.2003
(51) Int. Cl.: B62D 11/14

(54) **ELEKTRO-HYDRODYNAMISCHE ÜBERLAGERUNGSLENKUNG**
ELECTRO-HYDRODYNAMIC SUPERIMPOSED STEERING SYSTEM
DIRECTION DE SUPERPOSITION ELECTRO-HYDRODYNAMIQUE

(30) Priorität: 08.10.2002 DE 10246870
(43) Veröffentlichungstag der Anmeldung: 27.07.2005
(73) Patentinhaber: Renk Aktiengesellschaft, 86159 Augsburg (DE)
(72) Erfinder: WITZENBERGER, Max, 86447 Aindling (DE); ROTHFISCHER, Gerhard, 86179 Augsburg (DE)
(74) Vertreter: Grünberger, Christian Thomas
(86) Internationale Anmeldenummer: PCT/EP2003/011002
(87) Internationale Veröffentlichungsnummer: WO 2004/033272

(56) Entgegenhaltungen:
- WO-A-91/10585
- DE-A- 3 832 529

## Beschreibung

Die Erfindung betrifft eine Elektro-Hydrodynamische Überlagerungslenkung gemäß dem Patentanspruch 1.

Es ist allgemein bekannt Gleiskettenfahrzeuge oder Radfahrzeuge mit Radseitenlenkung zu lenken, indem der eigentlichen Fahrbewegung eine Lenkbewegung dahingehend überlagert wird, dass die Antriebsgeschwindigkeit auf der Kurvenaußenseite erhöht und auf der Kurveninnenseite verringert wird. Der eigentliche Fahrantrieb kann dabei gestuft oder stufenlos sein. Die Überlagerung der Lenkbewegung erfolgt über Summiergetriebe, die meist unmittelbar an den beiden Getriebeabtrieben angeordnet sind. Die Summiergetriebe sind üblicherweise mit einer mechanischen Welle - der sogenannten Nullwelle - verbunden, welche einen Leistungsfluss von der abzubremsenden Kurveninnenseite auf die zu beschleunigende Außenseite ermöglicht und die vom Antriebsmotor erforderliche Lenkleistung gering hält.
Der Antrieb der Nullwelle bzw. des Lenksystems erfolgt in allgemein bekannten Ausführungsvarianten, indem vom eigentlichen Fahrmotor Leistung abgezweigt wird und über gestufte mechanische Getriebe, über Kupplungen, über stufenlose hydrostatische Antriebe oder über leistungsverzweigte stufenlose hydrostatische mechanische oder stufenlos hydrostatisch-hydrodynamische Antriebe auf die Nullwelle übertragen wird.

Allen mechanischen und hydrostatischen Anordnungsvarianten, mit Hydrodynamik kombiniert oder nicht, ist gemeinsam, dass die Lenkbetätigung einkreisig ausgeführt ist, d.h. bei Ausfall der Hydrostatik vor allem bei Ausfall der mechanischhydraulischen Ansteuerung der Hydrostatik fällt die Lenkung aus. Eine Zweikreisigkeit, d. h. zwei parallele Lenkbetätigungen vorzusehen, führt prinzipbedingt zur größeren Komplexität und erhöht das Ausfallrisiko zusätzlich, da z.B. zusätzliche Kupplungen einzubauen sind, die den jeweils ein falsches Lenksignal gebenden Zweig abschalten müssen.
Aus der DE 37 28 171 C2 ist ein stufenloser Antrieb eines Lenksystems mittels eines Elektromotors bekannt. Dieses rein elektrische Lenksystem kann zweikreisig ausgeführt werden, da der Kreis, der die falsche Ansteuerung erhält, elektrisch überwacht und abgeschaltet werden kann. Der defekte Elektro-Motor kann in diesem Fall vom noch intakten Elektro-Motor leer mitgedreht werden.
Das elektrische Lenksystem erfordert jedoch zusammen mit der notwendigen Leistungselektronik einen wesentlich größeren Bauraum als mechanische, hydrostatische oder hydrodynamische Kombinationen oder entsprechende Einzellösungen.

Aus der internationalen Anmeldung WO 91/10585 ist eine Überlagerungslenkung nach dem Oberbegriff von Anspruch 1 bekannt für Gleiskettenfahrzeuge oder Radfahrzeuge mit nicht schwenkbaren Rädern. Es ist ein Fahrantrieb und eine Nullwelle zur Übertragung von Antriebsleistung von einer zur anderen Antriebsseite über Differentialgetriebe vorgesehen. Die Nullwelle kann durch eine Kombination aus einem, vom Fahrantrieb abgezweigten Leistungsanteil und einem Elektromotor angetrieben werden.

Aufgabe der Erfindung ist es, eine Lenkanlage für Gleiskettenfahrzeuge oder Radfahrzeuge mit Radseitenlenkung zu schaffen, welche eine kleine Gesamtbaugröße und ein niedriges Gesamtgewicht aufweist und eine Zwei- oder Mehrkreisigkeit zulässt.

Diese Aufgabe wird erfindungsgemäß durch die Merkmale des Patentanspruchs 1 gelöst.

Eine erfindungsgemäße Lenkanlage weist eine vorteilhaft geringe Gesamtbaugröße und niedriges Gesamtgewicht auf und lässt sich mit geringstem Aufwand in das Antriebssystem integrieren.
Erfindungsgemäße Lenkanlagen lassen sich Zwei- oder Mehrkreisig ausführen, so dass sich das Fahrzeug bei Ausfall eines Betätigungskreises in vorteilhafter Weise weiterhin lenken lässt.
Darüber hinaus erlaubt es eine erfindungsgemäße Anordnung, die Nullwelle platzsparend zentral durch die Lenkanlage zu führen, wodurch sich ein vorteilhaft kompakter Aufbau ergibt.
Durch die Antriebs-Kombination aus einem zwei- oder mehrkreisigem Elektromotor oder mehreren einzelnen Elektro-Motoren mit Hydrodynamischen Lenkkupplungen (jeweils eine oder mehrere für Rechts- und Linkslauf) kann die erforderliche elektrische Lenkleistung gegenüber einem rein elektrischen Lenkantrieb sehr stark abgesenkt werden. Es kann vorteilhaft sein, an den hydrodynamischen Lenkkupplungen zusätzlich mechanisch schaltbare Überbrückungskupplungen vorzusehen, um die elektrische Lenkleistung weiter reduzieren zu können.

Weitere Merkmale und Vorteile ergeben sich aus den Unteransprüchen in Verbindung mit der Beschreibung.

Nachfolgend werden die Merkmale der vorliegenden Erfindung anhand bevorzugter Ausführungsformen näher erläutert. In den zugehörigen schematischen Zeichnungen zeigt, die
- Fig. 1: eine erste erfindungsgemäße Ausführungsform mit direkt an die Nullwelle angekoppeltem Elektromotor, die
- Fig. 2: stellt ein weiteres Ausführungsbeispiel mit einem Elektromotor dar, der die Nullwelle über eine Planetengetriebestufe antreibt, die
- Fig. 3: betrifft eine Ausführung, bei welcher die Nullwelle außerhalb des Lenkgetriebes vorbeigeleitet ist und
- Fig. 4: zeigt eine Ausführungsform mit nur einer hydrodynamischen Kupplung und mechanische Kupplungen für die beiden Drehrichtungen der Nullwelle.

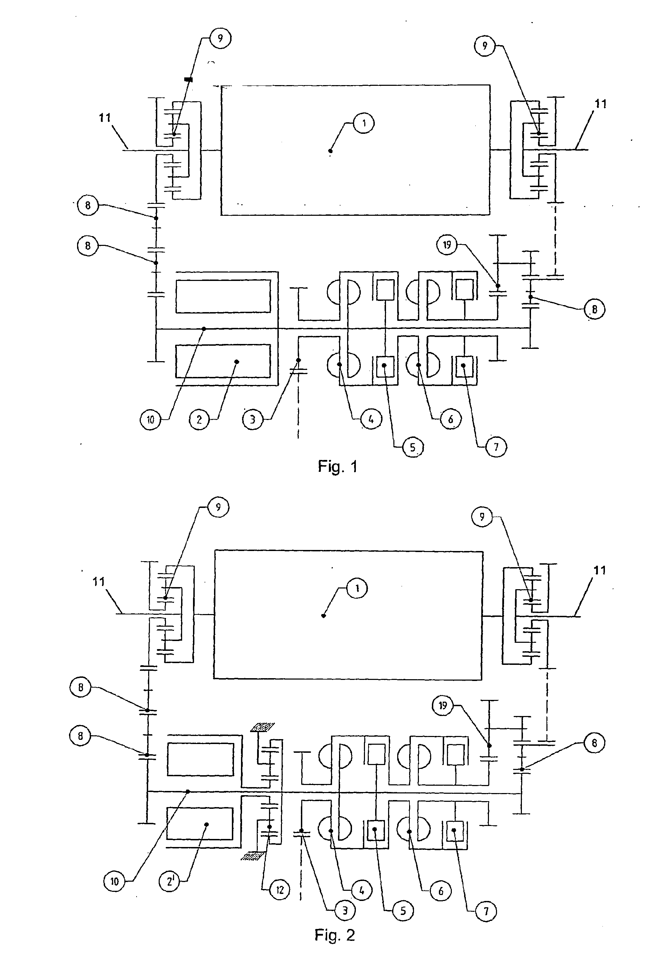

Die Fig. 1 zeigt eine erste erfindungsgemäße Ausführungsform mit einem Fahrantrieb 1, beispielsweise bestehend aus einem Motor, der über ein schaltbares Getriebe und die Lenkdifferenziale 9 auf die Abtriebswellen 11 wirkt. Die Abtriebswellen 11 können beispielsweise über Untersetzungsgetriebe, sogenannte Seitenvorgelege, mit Kettenrädern zum Antrieb von Gleisketten gekoppelt werden. Statt mit Kettenrädern können die Abtriebswellen 11 auch mit Rädern von Radfahrzeugen verbunden werden.
Die Lenkdifferenziale 9 werden über Hohlräder vom Fahrantrieb 1 angetrieben und die Überlagerungsdrehzahlen zum Lenken des Fahrzeuges werden über die Sonnenräder der Lenkdifferenziale 9 eingetrieben. Die umlaufenden Planetenräder treiben die Abtriebswellen 11 über ihre Planetenträger an.
Bei Geradeausfahrt bzw. bei geringem Lenkradeinschlag kann das erforderliche Lenkmoment bzw. die erforderliche Lenkleistung ausschließlich vom Elektromotor 2 erbracht werden. Der Elektromotor 2 treibt dazu die sogenannte Nullwelle 10 an, welche die Sonnenräder der Lenkdifferenziale 9 der beiden Fahrzeugseiten gegensinnig zueinander antreibt. Dazu ist auf der einen Fahrzeugseite ein Zahnradzug mit zwei Zwischenrädern 8 und auf der anderen Fahrzeugseite ein Zahnradzug mit einem Zwischenrad 8 vorgesehen. Die eine Seite muss eine gerade und die andere eine ungerade Anzahl von Zwischenrädern 8 aufweisen, um die eine Antriebsseite zu beschleunigen und die andere zu verlangsamen.
Der Elektromotor 2 ist vorzugsweise zwei- oder mehrkreisig ausgeführt, d.h. der Motor ist mit zwei oder mehr voneinander unabhängigen elektrischen Wicklungen versehen, oder die elektrische Antriebsleistung wird durch zwei oder mehrere Elektromotoren erbracht. Falls ein Kreis oder einer der Motoren ausfällt ist immer noch ein weiterer funktionsfähig, um die Nullwelle 10 antreiben zu können. Der elektrische Antrieb kann - ohne Übersetzungsstufe - direkt mit der Nullwelle 10 mechanisch gekoppelt sein.
Kleinere Kurvenradien des Fahrzeugs erfordern einen höheren Lenkleistungsbedarf bzw. eine Erhöhung der Lenkdrehzahl, wofür die absichtlich niedriggehaltene installierte Leistung des Elektromotors 2 nicht mehr ausreicht. Um den höheren Bedarf an Lenkleistung zu decken, sind zwei hydrodynamische Kupplungen 4, 6 vorgesehen, welche entsprechend geregelt zugeschaltet werden können.
Die hydrodynamischen Kupplungen 4, 6 werden über ein Antriebsrad 3 angetrieben, welches mit dem Fahrantrieb 1 verbunden ist. Je nach dem wie viel Hydraulikflüssigkeit zugeführt wird, bzw. wie groß ihre Füllung ist, können die hydrodynamischen Kupplungen 4, 6 die entsprechende Leistung auf die Nullwelle 10 übertragen.
Für eine Drehzahlüberlagerung, die zu einer Linkskurve führt, wird die erste hydrodynamische Kupplung 4 zugeschaltet und entsprechend für eine Rechtskurve die andere hydrodynamische Kupplung 6. Welche hydrodynamische Kupplung 4, 6 welche Fahrtrichtungsänderung bewirkt, ist abhängig von der Anzahl der Zwischenräder 8 zum jeweiligen Lenkdifferential 9, wobei eine Seite eine gerade und die andere Seite eine ungerade Anzahl von Zwischenrädern 8 aufweisen muss, sowie von der Einbaulage des Lenkgetriebes im Fahrzeug.
Bei dem in Fig. 1 dargestellten Ausführungsbeispiel ist die erste hydrodynamische Kupplung 4 direkt mit der Nullwelle 10 verbunden und die andere hydrodynamische Kupplung 6, welche über das Antriebsrad 3 in der selben Drehrichtung wie die erste angetrieben wird, ist über ein Wendegetriebe 19 mit der Übersetzung i = -1 an die Nullwelle 10 gekoppelt.
Die Lenkdifferenziale 9 sind einerseits mit dem Lenkgetriebe bzw. der Nullwelle 10 und zum anderen mit dem Fahrantrieb 1 verbunden und leiten den Kraftfluss über die Abtriebswellen 11 zu den Fahrzeugketten bzw. Fahrzeugrädern.
Um den prinzipbedingten Schlupf von hydrodynamischen Kupplungen zu umgehen, ist es vorteilhaft mechanische Überbrückungskupplungen 5 und 7 vorzusehen. Diese können entsprechend der zugeordneten hydrodynamischen Kupplung 4, 6 geregelt beaufschlagt werden und als Rutschkupplung einen Teil der verfügbaren Leistung oder vollständig geschlossen die komplette mechanische Lenkleistung auf die Nullwelle 10 übertragen.

Die mechanischen Überbrückungskupplungen 5, 7 sind insbesondere dann von Interesse, wenn der beispielsweise mehrkreisig ausgelegte Elektromotor komplett ausfallen würde. In diesem Fall könnte der-durch den Lenkradeinschlag vorgegebene - Kurvenradius mit der entsprechenden mechanischen Kupplung 5 oder 7 gehalten werden. Wodurch insbesondere gegenüber hydrostatisch-hydrodynamischen Lenkantrieben, eine weitere Verringerung der Ausfallwahrscheinlichkeit der gesamten Lenkeinheit erreicht wird.
Besonders vorteilhaft wirken die mechanischen Überbrückungskupplungen 5 bzw. 7, wenn das Fahrzeug auf der Stelle gewendet werden soll ("Pivoting"). Beim sogenannten Drehen um die Hochachse soll ein Fahrzeug in einer möglichst kurzen Zeit eine Fahrtrichtungsänderung von maximal 360° erfahren. Bei diesem Vorgang kann die entsprechende Überbrückungskupplung 5 oder 7 vollständig geschlossen werden und die Lenkdrehzahl und daraus proportional die Lenkleistung um bis zu 20% gesteigert werden.

Der wesentliche Kern der Erfindung besteht darin, eine Lenkanlage für Kettenfahrzeuge oder Radfahrzeuge mit nichtschwenkbaren Rädern durch einen verhältnismäßig klein dimensionierten Elektromotor, zusammen mit - vom Fahrantrieb abgezweigter - Leistung anzutreiben. Durch diese Antriebskombination weist einderartig ausgestattetes Fahrzeug ein sehr präzises Lenkverhalten - auch insbesondere um die Lenkradnullstellung - auf. Wobei in vorteilhafter Weise der elektrische Leistungsbedarf gegenüber einem rein elektrischen Antrieb der Nullwelle auch bei hohem Lenkleistungsbedarf (Maximalwert beim Drehen um die Hochachse) wesentlich geringer ist. Die durch die erfindungsgemäße Anordnung vergleichsweise niedrig gehaltene zu installierende elektrische Antriebsleistung kann z.B. durch ein Vergrößern des Startermotors oder durch "Leistungssharing" mit anderen elektrischen Verbrauchern ohne das Gesamtbauvolumen erheblich zu vergrößern in ein Fahrzeugkonzept eingebunden werden. Weiterhin kann ein erfindungsgemäßer Lenkantrieb auf Mehrkreisigkeit - mit separaten elektrischen und hydraulischen Kreisen - ausgelegt werden.

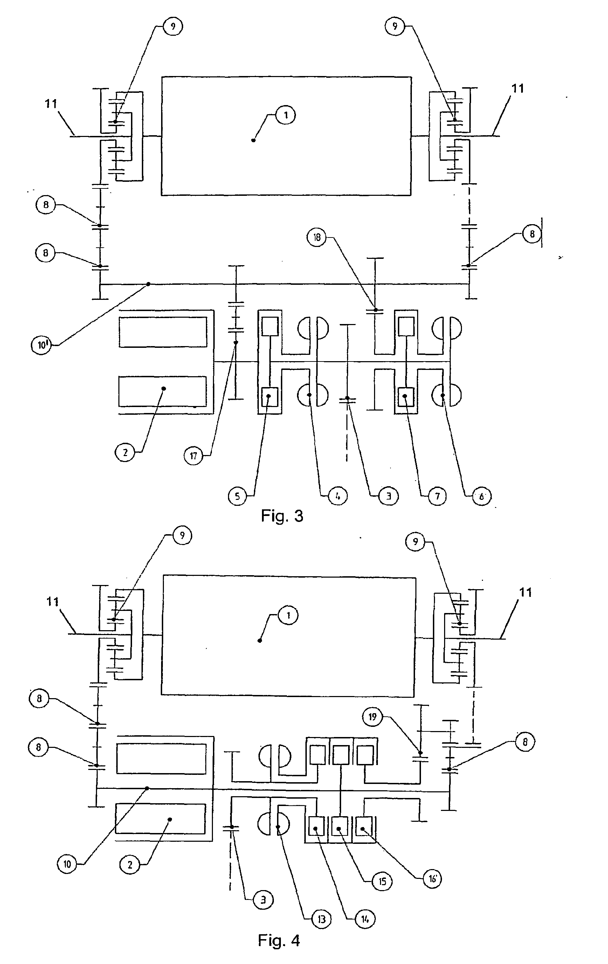

Die in Fig. 2 dargestellte Ausführung entspricht im wesentlichen der gemäß Fig. 1 beschriebenen, wobei der Elektromotor 2' mit einer unterschiedlichen Drehzahl zur Nullwelle ausgelegt ist, weshalb es zusätzlich einer entsprechend ausgelegten Übersetzungsstufe 12, vorzugsweise einer Planetengetriebestufe bedarf. Dadurch kann bei entsprechender Auslegung des Elektromotors 2' nochmals Bauraum eingespart werden.
In Fig. 3 ist ein Ausführungsbeispiel mit außerhalb des Lenkgetriebes vorbeigeleiteter Nullwelle 10' dargestellt. Diese Anordnung der Nullwelle 10' kann bauartbedingt notwendig werden, um die Überlagerungsdrehzahlen zu den Lenkdifferenzialen 9 anzupassen. Der Elektromotor 2 kann die Nullwelle 10' über einen Zahnradzug 17 antreiben, wobei der Elektromotor 2 - wie in den anderen Ausführungsbeispielen auch - bezüglich seiner Drehrichtung sowie Drehzahl regelbar ist.
Die hydrodynamischen Kupplungen 4, 7 werden wie bei den vorherigen Beispielen vom Fahrantrieb 1 über ein Antriebsrad 3 gleichsinnig angetrieben. Die erste hydrodynamische Kupplung 4 kann die Nullwelle 10' bei gesteuerter Befüllung über den ersten Zahnradzug 17 in der einen Drehrichtung antreiben und die andere Kupplung 7 über den anderen Zahnradzug 18 in der entgegengesetzten Richtung. Die Drehrichtungsumkehr der Nullwelle 10' erfolgt dabei durch eine gerade bzw. ungerade Anzahl von Zahnrädern in den Zahnradzügen 17 und 18. Die Antriebsverbindungen zwischen der Nullwelle 10' und den Lenkdifferenzialen 9 ist wie in den anderen Ausführungsbeispielen durch gerade bzw. ungerade Anzahl von Zwischenrädern 8 realisiert.

Die Fig. 4 zeigt eine Ausführungsform mit nur einer hydrodynamischen Kupplung 13 und zwei mechanischen Kupplungen 15, 16 für die beiden Drehrichtungen der Nullwelle 10. Der Elektromotor 2 treibt die Nullwelle 10 analog zur Ausführung gemäß Fig. 1 direkt an. Die einzige hydrodynamische Kupplung 13 wird über ein Antriebsrad 3 vom Fahrantrieb 1 angetrieben und kann die Antriebsleistung über die mechanischen Kupplungen 15 oder 16 auf die Nullwelle 10 übertragen, wobei für die Drehrichtungsumkehr ein Wendegetriebe 19 vorgesehen ist. Zum Überbrücken der hydrodynamischen Kupplung 13 kann eine Überbrückungskupplung 14 vorgesehen werden.
Zum Aufbringen größerer Lenkleistungen muss somit neben der hydrodynamischen Kupplung 13, gleichzeitig die entsprechende mechanische Kupplung 15 oder 16 beaufschlagt werden, um das Fahrzeug nach links oder rechts zu lenken. Zum Umgehen des hydrodynamischen Schlupfs oder bei Ausfall der hydrodynamischen Kupplung 13 kann die Überbrückungskupplung 14 den vom Fahrantrieb 1 beigetragenen Lenkleistungsanteil zu den Lenkkupplungen 15, 16 übertragen.
Im Hinblick auf die Betriebssicherheit des Lenkantriebs durch Mehrkreisigkeit erscheinen die Ausführungen gemäß den Fig. 1-3 sinnvoller.
In allen erfindungsgemäßen Anordnungen ist es auch möglich statt der hydrodynamischen Kupplungen 4, 7, 13 entsprechende regelbare lastschaltbare mechanische Kupplungen, wie z.B. Lamellenkupplungen, vorzusehen. Bei derartigen Ausführungen könnte auf die Überbrückungskupplungen 5, 7, 14 verzichtet werden.
In allen Ausführungsbeispielen sind entsprechende Steuerungs-/Regelungseinrichtungen vorgesehen, welche die - beispielsweise von einem Lenkrad vorgegebenen - Lenkbefehle durch entsprechende Ansteuerung der verschiedenen Lenkungselemente umsetzen.

### Bezugszeichenliste

- 1: Fahrantrieb
- 2, 2': Elektromotor
- 3: Antriebsrad
- 4: Hydrodynamische Kupplung
- 5: Überbrückungskupplung
- 6: Hydrodynamische Kupplung
- 7: Überbrückungskupplung
- 8: Zwischenrad
- 9: Lenkdifferential
- 10,10': Nullwelle
- 11: Abtriebswelle
- 12: Übersetzungsstufe
- 13: Hydrodynamische Kupplung
- 14: Überbrückungskupplung
- 15: Kupplung
- 16: Kupplung
- 17: Zahnrad
- 18: Zahnrad
- 19: Wendegetriebe

## Patentansprüche

1. Überlagerungslenkung für Gleiskettenfahrzeuge oder Radfahrzeuge mit nichtschwenkbaren Rädern mit einem Fahrantrieb (1) und einer Nullwelle (10, 10') zur Übertragung von Antriebsleistung von einer zur anderen Antriebsseite über mindestens ein Lenkdifferenzialgetriebe (9), wobei die Nullwelle (10, 10') durch eine Kombination aus einem, vom Fahrantrieb (1) abgezweigten Leistungsanteil und mindestens einem Elektro-Motor (2, 2') antreibbar ist, **dadurch gekennzeichnet, dass** zur Übertragung, des vom Fahrantrieb (1) abgezweigten Lenkleistungsanteils mindestens eine hydrodynamische Lenkungskupplung (4, 6;13) oder mindestens eine mechanisch regelbare lastschaltbare Kupplung vorgesehen ist.

2. Überlagerungslenkung nach einem der vorangehenden Ansprüche, **dadurch gekennzeichnet, dass** als Elektromotor (2, 2'), ein mit mehreren voneinander unabhängigen Stromkreisen ausgestatteter Elektromotor oder mehrere Elektromotoren vorgesehen sind.

3. Überlagerungslenkung nach Anspruch 1, **dadurch gekennzeichnet, dass** für jede Drehrichtung der Nullwelle (10, 10') mindestens eine hydrodynamische Lenkungskupplung (4, 6) oder mindestens eine mechanisch regelbare lastschaltbare Kupplung vorgesehen ist.

4. Überlagerungslenkung nach einem der vorangehenden Ansprüche, **dadurch gekennzeichnet, dass** zur Überbrückung der hydrodynamischen Lenkungskupplungen (4, 6; 13) mechanische Kupplungen (5, 7; 14) vorgesehen sind.

5. Überlagerungslenkung nach einem der vorangehenden Ansprüche, **dadurch gekennzeichnet, dass** die Nullwelle (10, 10') zentral durch die Lenkanlage geführt ist oder neben der Lenkanlage angeordnet ist.

6. Überlagerungslenkung nach einem der vorangehenden Ansprüche, **dadurch gekennzeichnet, dass** nur eine hydrodynamische Lenkungskupplung (13) vorgesehen ist sowie eine erste mechanische Kupplung (15), durch welche die Nullwelle (10) direkt antreibbar ist und eine weitere mechanische Kupplung (16), durch welche die Nullwelle (10, 10') über ein Wendegetriebe (19) in umgekehrter Drehrichtung antreibbar ist.

7. Überlagerungslenkung nach einem der vorangehenden Ansprüche, **dadurch gekennzeichnet, dass** die Lenkanlage in ein Fahrzeuggetriebe (1) integrierbar oder als separate Baugruppe einem Fahrzeuggetriebe (1) nachschaltbar ist.

8. Überlagerungslenkung nach einem der vorangehenden Ansprüche, **dadurch gekennzeichnet, dass** der oder die Elektromotoren (2, 2'), die Lenkhydrodynamiken (4, 6, 13) und die Kupplungen (5, 7, 15, 16) ohne drehzahlanpassende Getriebezüge mit der Nullwelle (10, 10') verbunden sind.

9. Überlagerungslenkung nach einem der vorangehenden Ansprüche, **dadurch gekennzeichnet, dass** die Leistungselektronik und die Steuerelektronik für den oder die Elektromotoren (2, 2') am Getriebe angeordnet sind.

10. Überlagerungslenkung nach einem der vorangehenden Ansprüche, **dadurch gekennzeichnet, dass** die mechanischen Kupplungen (5, 7, 14, 15, 16) als Lamellenkupplungen ausgeführt sind.

## Claims

1. Superimposed steering system for tracked vehicles or wheeled vehicles having non-swivelling wheels with a travel drive (1) and a zero shaft (10, 10') for transmitting driving power from one drive side to the other by way of at least one steering differential gear unit (9), with it being possible to drive the zero shaft (10, 10') by means of a combination of a portion of power derived from the travel drive (1) and at least one electric motor (2, 2'), **characterised in that** provided for the purpose of transmitting the steering-power portion derived from the travel drive (1) there is at least one hydrodynamic steering coupling (4, 6; 13) or at least one mechanically controllable load-switchable coupling.

2. Superimposed steering system according to one of the preceding claims, **characterised in that** one electric motor, equipped with a plurality of independent electric circuits, or a plurality of electric motors are provided as the electric motor (2, 2').

3. Superimposed steering system according to claim 1, **characterised in that** provided for each direction of rotation of the zero shaft (10, 10') there is at least one hydrodynamic steering coupling (4, 6) or at least one mechanically controllable load-switchable coupling.

4. Superimposed steering system according to one of the preceding claims, **characterised in that** mechanical couplings (5, 7; 14) are provided to bridge over the hydrodynamic steering couplings (4, 6; 13).

5. Superimposed steering system according to one of the preceding claims, **characterised in that** the zero shaft (10, 10') is guided centrally through the steering installation or is arranged next to the steering installation.

6. Superimposed steering system according to one of the preceding claims, **characterised in that** only one hydrodynamic steering coupling (13) is provided, as well as a first mechanical coupling (15), by means of which the zero shaft (10) can be driven directly, and a further mechanical coupling (16), by means of which the zero shaft (10, 10') can be driven in the opposite direction of rotation by way of a reversing gear unit (19).

7. Superimposed steering system according to one of the preceding claims, **characterised in that** the steering installation can be integrated into a vehicle gear unit (1) or can be connected downstream of a vehicle gear unit (1) as a separate assembly.

8. Superimposed steering system according to one of the preceding claims, **characterised in that** the electric motor or electric motors (2, 2'), the steering hydrodynamics (4, 6, 13) and the couplings (5, 7, 15, 16) are connected to the zero shaft (10, 10') without speed-matching gear trains.

9. Superimposed steering system according to one of the preceding claims, **characterised in that** the power electronics and the control electronics for the electric motor or motors (2, 2') are arranged at the gear unit.

10. Superimposed steering system according to one of the preceding claims, **characterised in that** the mechanical couplings (5, 7, 14, 15, 16) are realized as multiple-disc couplings.

## Revendications

1. Direction de superposition pour des véhicules à chenilles ou des véhicules à roues dont les roues ne peuvent pivoter, comprenant un entraînement (1) et un arbre neutre (10, 10') pour transmettre la puissance motrice d'un côté de l'entraînement à l'autre par au moins une transmission différentielle de guidage (9), l'arbre neutre (10, 10') étant entraîné par la combinaison formée d'une partie de puissance dérivée de l'entraînement (1) et d'au moins un moteur électrique (2, 2'),
**caractérisée par**
au moins un embrayage de direction hydrodynamique (4, 6 ; 13) ou au moins un embrayage commutable en charge, réglable mécaniquement, pour transmettre la partie de puissance de guidage dérivée de l'entraînement (1).

2. Guidage de superposition selon la revendication 1,
**caractérisé en ce que**
le moteur électrique (2, 2") est constitué par un moteur électrique équipé de plusieurs circuits électriques indépendants ou par plusieurs moteurs électriques.

3. Guidage de superposition selon la revendication 1,
**caractérisé en ce que**
pour chaque sens de rotation de l'arbre neutre (10, 10"), il est prévu au moins un embrayage de direction hydrodynamique (4, 6) ou au moins un embrayage commutable en charge et réglable mécaniquement.

4. Guidage de superposition selon l'une des revendications précédentes,
**caractérisé par**
des embrayages mécaniques (5, 7 ; 14) pour contourner les embrayages de direction (4, 6 ; 13) hydrodynamiques.

5. Guidage de superposition selon l'une des revendications précédentes,
**caractérisé en ce que**
l'arbre neutre (10, 10') passe au centre de l'installation de guidage ou à côté de celle-ci.

6. Guidage de superposition selon l'une des revendications précédentes,
**caractérisé en ce qu'**
il n'est prévu qu'un embrayage de guidage hydrodynamique (13) et un premier embrayage mécanique (15) qui entraînent directement l'arbre neutre (10) et un autre embrayage mécanique (16) qui entraîne l'arbre neutre (10, 10') par une transmission réversible (19) dans le sens de rotation inverse.

7. Guidage de superposition selon l'une des revendications précédentes,
**caractérisé en ce que**
l'installation de guidage est intégrée dans une transmission d'entraînement de véhicule (1) ou comme ensemble séparé d'une transmission de véhicule (1).

8. Guidage de superposition selon l'une des revendications précédentes,
**caractérisé en ce que**
le ou les moteurs électriques (2, 2'), les embrayages hydrodynamiques de guidage (4, 6, 13) et les embrayages (5, 7, 15, 16) sont reliés à l'arbre neutre (10, 10') sans train de transmission d'adaptation de vitesse de rotation.

9. Guidage de superposition selon l'une des revendications précédentes,
**caractérisé en ce que**
l'électronique de puissance et l'électronique de commande du ou des moteurs électriques (2, 3) sont prévues sur la transmission.

10. Guidage de superposition selon l'une des revendications précédentes,
**caractérisé en ce que**
les embrayages mécaniques (5, 7, 14, 15, 16) sont des embrayages à lamelles.
